# EUROPÄISCHE PATENTANMELDUNG

(11) **EP 4 336 632 A1**
(43) Veröffentlichungstag der Anmeldung: **13.03.2024**
(21) Anmeldenummer: 22194400.2
(22) Anmeldetag: 07.09.2022
(51) Int. Cl.: H01M 50/107, H01M 50/179, H01M 50/188, H01M 50/536, H01M 50/533, H01M 50/56, H01M 50/566, H01M 10/0587, H01M 10/0525, H01M 10/04

(54) **ENERGIESPEICHERELEMENT UND VERFAHREN ZUM HERSTELLEN EINES SOLCHEN ENERGIESPEICHERELEMENTS**

(71) Anmelder: VARTA Microbattery GmbH, 73479 Ellwangen Jagst (DE)
(72) Erfinder: Ensling, David, 73479 Ellwangen (DE); Frank, Waldemar, 73479 Ellwangen (DE); Geiger, Michael, 73479 Ellwangen (DE); Pytlik, Edward, 73479 Ellwangen (DE)
(74) Vertreter: Ostertag & Partner Patentanwälte mbB

(57) **Zusammenfassung**

Die Erfindung betrifft ein Energiespeicherelement, das einen Elektroden-Separator-Verbund in einem Gehäuse umfasst. Es umfasst weiterhin ein Metallteil, das eine erste endständige Stirnseite des Elektroden-Separator-Verbunds abdeckt und an einen aus dieser Stirnseite austretenden freien Randstreifen eines Stromkollektors geschweißt ist. Weiter umfasst das Metallteil einen von der Stirnseite weg weisenden Vorsprung, wobei der Vorsprung in eine Durchbrechung im Boden des Gehäuses eingeschoben ist oder durch diese hindurchragt, so dass der Vorsprung von außerhalb des Gehäuses mechanisch kontaktierbar ist. Ferner betrifft die Erfindung ein Verfahren zur Herstellung eines solchen Energiespeicherelements.

## Beschreibung

### Anwendungsgebiet und Stand der Technik

Die nachstehend beschriebene Erfindung betrifft ein Energiespeicherelement und ein Verfahren zum Herstellen eines solchen Energiespeicherelements.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom in der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann.

Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z.B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₄) in organischen Lösungsmitteln (z.B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode (Kathode) / Separator / negative Elektrode (Anode) spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen.

In der WO 2017/215900 A1 sind zylindrische Rundzellen ausgebildet, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle eine Kontaktplatte auf, die auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Allerdings ist es bei Zellen wie den in der WO 2017/215900 A1 beschriebenen stets erforderlich, die Kontaktplatte über einen separaten elektrischen Leiter mit einem Gehäuseteil oder einem durch ein Gehäuseteil geführten Pol zu verbinden. Der separate elektrische Leiter benötigt Platz innerhalb des Gehäuses. Darüber hinaus erfordert seine Verwendung einen zusätzlichen Montageaufwand.

### Aufgabe und Lösung

Ausgehend von diesem Stand der Technik war er wünschenswert, die Energiedichte von Energiespeicherelementen weiter zu erhöhen, insbesondere von Energiespeicherelementen des in der WO 2017/215900 A1 beschriebenen Typs.

Diese Aufgabe wird durch das Energiespeicherelement mit den Merkmalen des Anspruchs 1 gelöst. Auch das Herstellungsverfahren mit den Merkmalen des Anspruchs 11 ist Gegenstand der Erfindung. Bevorzugte Ausführungsformen der Erfindung finden sich in den abhängigen Ansprüchen.

### Erfindungsgemäßes Speicherelement

Das erfindungsgemäße Energiespeicherelement weist zur Lösung der oben angegebenen Aufgabe stets die unmittelbar folgenden Merkmale a. bis f. auf:
a. Das Energiespeicherelement umfasst einen Elektroden-Separator-Verbund mit der Sequenz Anode / Separator / Kathode, wobei
   - die Anode des Elektroden-Separator-Verbunds bandförmig ausgebildet ist und einen bandförmigen Anodenstromkollektor umfasst, der einen ersten Längsrand und einen dazu parallelen zweiten Längsrand aufweist,
   - der bandförmige Anodenstromkollektor einen Hauptbereich umfasst, der mit einer Schicht aus einem negativen Elektrodenmaterial beladen ist, sowie einen freien Randstreifen, der sich entlang seines ersten Längsrands erstreckt und der nicht mit dem negativen Elektrodenmaterial beladen ist,
   - die Kathode des Elektroden-Separator-Verbunds bandförmig ausgebildet ist und einen bandförmigen Kathodenstromkollektor umfasst, der einen ersten Längsrand und einen dazu parallelen zweiten Längsrand aufweist,
   - der bandförmige Kathodenstromkollektor einen Hauptbereich umfasst, der mit einer Schicht aus einem positiven Elektrodenmaterial beladen ist, sowie einen freien Randstreifen, der sich entlang seines ersten Längsrands erstreckt und der nicht mit dem positiven Elektrodenmaterial beladen ist,
   - der Elektroden-Separator-Verbund in Form eines zylindrischen Wickels mit einer ersten endständigen Stirnseite und einer zweiten endständigen Stirnseite und einem dazwischen liegenden Wickelmantel vorliegt und die Anode und die Kathode in spiralförmig aufgewickelter Form umfasst,
   - die Anode und die Kathode innerhalb des als Wickel ausgebildeten Elektroden-Separator-Verbunds derart ausgebildet und/oder angeordnet sind, dass der freie Randstreifen des Kathodenstromkollektors oder der freie Randstreifen des Anodenstromkollektors aus der ersten endständigen Stirnseite austritt,
b. das Energiespeicherelement umfasst ein luft- und flüssigkeitsdicht verschlossenes Gehäuse, das einen metallischen Gehäusebecher mit einem Boden und einer umlaufenden Seitenwand sowie einer endständigen Öffnung und einen Deckel aufweist,
c. das Energiespeicherelement umfasst ein Metallteil, das die erste endständige Stirnseite abdeckt,
d. das Metallteil umfasst einen flachen Bereich, an den der aus der ersten endständigen Stirnseite austretende freie Randstreifen geschweißt ist, und einen von der ersten endständigen Stirnseite weg weisenden Vorsprung,
e. der Boden des Gehäusebechers weist eine Durchbrechung auf, in welche der Vorsprung eingeschoben ist oder durch welche der Vorsprung hindurchragt, so dass der Vorsprung von außerhalb des Gehäuses mechanisch kontaktierbar ist und
f. der Boden und das Metallteil sind durch eine elektrisch isolierende Dichtung voneinander isoliert.

Bei dem aus der endständigen Stirnseite austretenden freien Randstreifen kann es sich um den freien Randstreifen des Kathodenstromkollektors oder um den freien Randstreifen des Anodenstromkollektors handeln. Bevorzugt handelt es sich um den freien Randstreifen des Kathodenstromkollektors.

Anders als bei der WO 2017/215900 A1 weist das erfindungsgemäße Energiespeicherelement ein Metallteil auf, das gleichzeitig als ein Verschlussmittel für das Gehäuse des Energiespeicherelements, als Ableiter für den Strom aus dem Anoden- oder Kathodenstromkollektor und als Pol fungiert. Entsprechend bedarf es keines separaten elektrischen Leiters, wie er aus dem Stand der Technik bekannt ist und dort in der Regel zwischen einem Deckel oder einer Deckelbaugruppe und einer Kontaktplatte, wie sie in der WO 2017/215900 A1 beschrieben ist. Das erfindungsgemäße Energiespeicherelement ist daher besonders einfach herzustellen. Das Fehlen des gesonderten Ableiters sowie des gesonderten Pols hat auch zur Folge, dass der Innenwiderstand des Energiespeicherelements abgesenkt werden kann und dass im Gehäuse mehr nutzbares Volumen zur Verfügung steht, wodurch zur Steigerung der Energiedichte mehr Aktivmaterial in das Gehäuse eingebracht werden kann.

### Bevorzugte Ausführung des Metallteils

Bevorzugt zeichnet sich das erfindungsgemäße Energiespeicherelement durch mindestens eines der unmittelbar folgenden Merkmale a. und b. aus:
a. Der von der ersten endständigen Stirnseite weg weisende Vorsprung des Metallteils ist napfförmig ausgebildet.
b. Das Metallteil einschließlich des Vorsprungs ist einstückig ausgebildet.

Es ist bevorzugt, dass die unmittelbar vorstehenden Merkmale a. und b. in Kombination realisiert sind.

Das Metallteil mit dem napfförmigen Vorsprung kann beispielsweise in einem Tiefziehprozess hergestellt werden, es ist dann zugleich bevorzugt einstückig ausgebildet. Es kann aber beispielsweise auch durch einen umformenden oder spanenden Fertigungsschritt aus einem metallischen Werkstück oder mittels 3D-Druck gefertigt werden.

Durch jedes dieser Merkmale für sich genommen und insbesondere durch diese Merkmale in einer der genannten Kombinationen wird die Komplexität des Aufbaus des Energiespeicherelements im Vergleich zu aus dem Stand der Technik bekannten Energiespeicherelementen weiter reduziert, was zu einer insgesamt noch günstigeren Herstellung und zu einer noch stärkeren Verringerung des Innenwiderstands des Energiespeicherelements führt.

### Anbindung einer der Elektroden an den Gehäusebecher und bevorzugtes zweites Metallteil

Während eine der Elektroden des erfindungsgemäßen Energiespeicherelements über den aus der ersten endständigen Stirnseite austretenden freien Randstreifen elektrisch mit dem Metallteil als erstes Metallteil verbunden ist, ist die andere der Elektroden bevorzugt elektrisch mit einem zweiten Metallteil verbunden. Das erfindungsgemäße Energiespeicherelement zeichnet sich entsprechend bevorzugt durch mindestens eines der unmittelbar folgenden Merkmale a. bis e. aus:
a. Die bandförmigen Elektroden sind innerhalb des als Wickel ausgebildeten Elektroden-Separator-Verbunds derart ausgebildet und/oder angeordnet, dass einer der freien Randstreifen des Anodenstromkollektors oder des Kathodenstromkollektors aus der ersten endständigen Stirnseite und der andere der freien Randstreifen aus der zweiten endständigen Stirnseite des Elektroden-Separator-Verbunds austritt.
b. Das Energiespeicherelement umfasst das die erste endständige Stirnseite abdeckende Metallteil als erstes Metallteil.
c. Ein zweites Metallteil deckt die zweite endständige Stirnseite ab und ist unmittelbar mit dem aus der zweiten endständigen Stirnseite austretenden freien Randstreifen verschweißt.
d. Das zweite Metallteil bildet den Deckel des Gehäuses.
e. Das zweite Metallteil verschließt die endständige Öffnung des Gehäusebechers.

Es ist besonders bevorzugt, dass die unmittelbar vorstehenden Merkmale b. und c., b. bis d., b. bis e. oder a. bis e. in Kombination realisiert sind.

Es gilt, dass es sich bei dem aus der ersten endständigen Stirnseite austretenden freien Randstreifen bevorzugt um den freien Randstreifen des Kathodenstromkollektors handelt. Entsprechend handelt es sich bei dem aus der zweiten endständigen Stirnseite austretenden Randstreifen bevorzugt um den freien Randstreifen des Anodenstromkollektors.

Grundsätzlich ist es auch möglich, dass an das zweite Metallteil ein gesonderter elektrischer Leiter geschweißt ist, der wiederum elektrisch an eine der Elektroden gekoppelt ist. In diesen Fällen besteht also keine unmittelbare Verbindung zwischen einem Randstreifen eines der Stromkollektoren und dem zweiten Metallteil.

### Bevorzugte Formgebung der Metallteile, der endständigen Öffnung und der Dichtung

Bevorzugt zeichnet sich das Energiespeicherelement durch mindestens eines der unmittelbar folgenden Merkmale a. bis e. aus:
a. Die endständige Öffnung des Gehäusebechers ist kreisförmig ausgebildet.
b. Das erste und/oder das zweite Metallteil sind scheibenförmig ausgebildet und weisen einen kreisförmigen Rand auf.
c. Der kreisförmige Rand des zweiten Metallteils ist um 90° umgebogen.
d. Die Dichtung ist zumindest bereichsweise scheiben- oder ringförmig ausgebildet und weist einen kreisförmigen Rand auf.
e. Das Energiespeicherelement umfasst ein Isoliermittel aus einem elektrisch isolierenden Material, das zwischen dem Rand des die erste Stirnseite abdeckenden Metallteils und dem Gehäusebecher angeordnet ist und den Rand des ersten Metallteils elektrisch von dem Potential des Gehäusebechers isoliert.

Es ist bevorzugt, dass die unmittelbar vorstehenden Merkmale in beliebiger Kombination realisiert sind, insbesondere aber in den Kombinationen a. und b., a., b. und d., b. und c. oder a. bis e.

Bei dem elektrisch isolierenden Material kann es sich beispielsweise um ein Polyimid enthaltendes Material handeln, das aufgedampft, aufgespritzt oder aufgeklebt sein kann. Insbesondere ein Polyimid enthaltendes Klebeband (bspw. Kapton ^{®} -Klebeband der Firma DuPont) eignet sich besonders gut als elektrisch isolierendes Material, um den Rand des (ersten) Metallteils elektrisch von dem Potential des Gehäusebechers zu isolieren.

Neben der Funktion, das erste Metallteil und den Boden des Gehäusebechers elektrisch voneinander zu isolieren, kommt der Dichtung außerdem die Funktion zu, das Gehäuse nach außen hin abzudichten, d.h. zu verhindern, dass es zu Leckagen des Elektrolyten bzw. zum Eindringen von Fremdstoffen in das Energiespeicherelement kommt.

### Bevorzugte Ausbildung des Gehäuses

Bevorzugt zeichnet sich das Energiespeicherelement durch mindestens eines der unmittelbar folgenden Merkmale a. bis c. aus:
a. Das Gehäuse umfasst in axialer Abfolge den Boden, einen Zentralabschnitt und einen Deckel-Verschlussabschnitt.
b. In dem Zentralabschnitt berührt der Wickelmantel des als Wickel ausgebildeten Elektroden-Separator-Verbunds die Innenseite des Gehäusebechers.
c. Der Zentralabschnitt ist zylindrisch ausgebildet.

Es ist bevorzugt, dass die unmittelbar vorstehenden Merkmale a. bis c. in Kombination realisiert sind.

Bei dem erfindungsgemäßen Energiespeicherelement handelt es sich bevorzugt um eine zylindrische Rundzelle. Zylindrische Rundzellen weisen bekanntlich ein zylindrisches Gehäuse mit einem in der Regel kreisrunden Boden auf.

Bevorzugt liegt die Höhe des als zylindrische Rundzelle ausgebildeten erfindungsgemäßen Energiespeicherelements im Bereich von 50 mm bis 150 mm. Ihr Durchmesser liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Besonders bevorzugt liegt der Wickelmantel des als Wickel ausgebildeten Elektroden-Separator-Verbunds in dem Zentralabschnitt unmittelbar an der Innenseite des Gehäusebechers an. In einigen Ausführungsbeispielen ist es vorgesehen, die Innenseite des Gehäuses in dem Zentralabschnitt, beispielsweise mittels einer Folie, elektrisch zu isolieren. In diesem Fall steht der Wickelmantel des Elektroden-Separator-Verbunds bevorzugt mit der mit der Folie ausgekleideten Innenseite des Gehäusebechers in Kontakt bzw. liegt an ihr an.

Der Deckel-Verschlussabschnitt umfasst den Bereich der Zelle, der durch den Deckel verschlossen ist.

Bevorzugt liegen der Deckel-Verschlussabschnitt und der Boden des Gehäusebechers an einander gegenüberliegenden Enden des Energiespeicherelements.

### Ausführungsform mit Abstandhalter

Bevorzugt zeichnet sich das Energiespeicherelement durch mindestens eines der unmittelbar folgenden Merkmale a. bis c. aus:
a. Das die erste Stirnseite abdeckende Metallteil weist eine zum Boden des Gehäusebechers hin gerichtete erste Seite und eine zum Elektroden-Separator-Verbund hin gerichtete zweite Seite auf.
b. Zwischen dem Boden des Gehäusebechers und dem die erste Stirnseite abdeckenden Metallteil ist ein ringförmiger Abstandhalter aus einem elektrisch isolierenden Material angeordnet.
c. Der Abstandhalter, die erste Seite des die erste Stirnseite abdeckenden Metallteils und der Boden des Gehäusebechers bilden einen Ringspalt aus, der von der Dichtung gefüllt ist.

Es ist bevorzugt, dass die unmittelbar vorstehenden Merkmale a. bis c. in Kombination realisiert sind.

In weiteren vorangehend und nachfolgend konkret beschriebenen Ausführungsformen kann das die erste Stirnseite abdeckende Metallteil das erste Metallteil sein.

Als Material für den Abstandhalter eignet sich ein thermoplastisches Kunststoffmaterial, beispielsweise Polybutylentherephthalat (PBT), Polypropylen (PP), Polyethylen (PE) oder Polyphenylensulfid (PPS). Dem Abstandhalter kommt die Funktion zu, zwischen dem die erste Stirnseite abdeckenden Metallteil und dem Boden des Gehäusebechers einen Abstand zu halten, damit die erste Seite des die erste Stirnseite abdeckenden Metallteils, der Abstandhalter selbst und der Boden des Gehäusebechers einen Ringspalt ausbilden, welcher von der Dichtung befüllt werden kann.

Die Dichtung besteht vorzugsweise aus einem ausgehärteten Vergussmaterial, welches während der Herstellung des Energiespeicherelements in den Ringspalt vergossen wurde. Für die Dichtung eignet sich ein lösemittelbeständiges Kunststoffmaterial, bevorzugt ein duroplastisches Kunststoffmaterial wie ein Epoxidharz, ein elastomeres Kunststoffmaterial oder ein thermoplastisches Kunststoffmaterial wie ein Polyester. Beispielsweise kann die Dichtung aus einem Epoxidharz (z.B. Loctite^{®} EA 9497 der Firma Henkel) gefertigt sein.

### Weitere bevorzugte Ausgestaltungen des ersten und des zweiten Metallteils

Bevorzugt zeichnet sich das Energiespeicherelement durch mindestens eines der unmittelbar folgenden Merkmale a. bis f. aus:
a. Der erste Längsrand, entlang dem sich der aus der ersten endständigen Stirnseite des Elektroden-Separator-Verbunds austretende freie Randstreifen erstreckt, bildet eine Fläche, auf der das die erste Stirnseite abdeckende Metallteil zumindest bereichsweise flach aufliegt oder in die das Metallteil zumindest bereichsweise eingepresst ist.
b. Der erste Längsrand, entlang dem sich der aus der zweiten endständigen Stirnseite des Elektroden-Separator-Verbunds austretende freie Randstreifen erstreckt, bildet eine Fläche, auf der das die zweite Stirnseite abdeckende Metallteil zumindest bereichsweise flach aufliegt oder in die das Metallteil zumindest bereichsweise eingepresst ist.
c. Das die erste Stirnseite abdeckende Metallteil ist derart dimensioniert, dass es mindestens 40 %, bevorzugt mindestens 60 %, besonders bevorzugt mindestens 80 %, der ersten endständigen Stirnseite abdeckt.
d. Das die zweite Stirnseite abdeckende Metallteil ist derart dimensioniert, dass es mindestens 40 %, bevorzugt mindestens 60 %, besonders bevorzugt mindestens 80 %, der ersten endständigen Stirnseite abdeckt.
e. Das die erste Stirnseite abdeckende Metallteil und/oder das die zweite Stirnseite abdeckende Metallteil weist eine bevorzugt gleichmäßige Dicke im Bereich von 50 µm bis 600 µm, bevorzugt im Bereich von 150 µm bis 350 µm, auf.
f. Der Vorsprung des die erste Stirnseite abdeckenden Metallteils ist zylindrisch ausgebildet und tritt auf der zweiten Seite des Metallteils als zylindrische Vertiefung und auf der ersten Seite des Metallteils als zylindrische Erhöhung zu Tage.

Es ist bevorzugt, dass die unmittelbar vorstehenden Merkmale a. und c. und/oder b. und c. in Kombination realisiert sind. In weiteren Ausführungsformen sind die Merkmale a. und c. und e. und/oder b. und c. und e. in Kombination realisiert. Besonders bevorzugt sind die Merkmale a. und c. und e. und f. und/oder b. und c. und e. und f. in Kombination realisiert

Der Vorsprung des die erste Stirnseite abdeckenden Metallteils fungiert, wie oben bereits erwähnt wurde, als Pol, der mit einem externen Energieverbraucher mittelbar über einen Leiter oder aber unmittelbar mechanisch elektrisch koppelbar ist.

### Bevorzugte Ausgestaltungen des Deckel-Verschlussabschnitts

In besonders bevorzugten Ausführungsformen ist der Deckel in die endständige Öffnung des Gehäusebechers eingeschweißt zwecks Verschluss derselben. Der Deckel und der Gehäusebecher weichen dann die gleiche Polarität auf.

In einer weiteren Variante kann der Deckel aber auch gegen den Gehäusebecher elektrisch isoliert sein. In dieser Ausführungsform kann der Deckel als Pol des erfindungsgemäßen Energiespeicherelements dienen, der Gehäusebecher kann potentialfrei sein.

Bevorzugt zeichnet sich das Energiespeicherelement in dieser weiteren Variante durch mindestens eines der unmittelbar folgenden Merkmale a. bis d. aus:
a. Der Zentralabschnitt und der Deckel-Verschlussabschnitt werden durch eine radiale Sicke, die die Außenseite des Gehäusebechers ringförmig umläuft, voneinander getrennt.
b. Das Energiespeicherelement umfasst die den Boden des Gehäusebechers und das erste Metallteil elektrisch voneinander isolierende Dichtung als erste Dichtung.
c. In dem Deckel-Verschlussabschnitt ist eine zweite Dichtung angeordnet, die in einem Presskontakt mit dem den Deckel des Gehäuses bildenden zweiten Metallteil und der Innenseite des Gehäusebechers steht.
d. Die zweite Dichtung ist ringförmig ausgebildet und weist einen kreisförmigen Rand auf.

Es ist bevorzugt, dass die unmittelbar vorstehenden Merkmale a. bis d. in Kombination realisiert sind.

Zur Herstellung des Presskontakts wird meist der Gehäusebecher radial nach innen gegen den Deckel gedrückt, wobei es zu einer Komprimierung der zweiten Dichtung kommt. Dies kann auch im Rahmen eines Crimp-Vorgangs geschehen, bei dem die ringförmig umlaufende radiale Sicke eine Rolle spielen kann.

Bei Ausgestaltungen des Energiespeicherelements gemäß vorstehender Variante mit der zweiten Dichtung, die in dem Presskontakt mit dem den Deckel des Gehäuses bildenden zweiten Metallteil und der Innenseite des Gehäusebechers steht, kann es bevorzugt sein, dass das Energiespeicherelement eine Referenzelektrode innerhalb des Gehäuses umfasst, die elektrisch mit dem Gehäusebecher verbunden ist. Bei der Referenzelektrode kann es sich beispielsweise um metallisches Lithium oder eine Lithiumverbindung handeln. Bevorzugt steht die Referenzelektrode in unmittelbarem Kontakt mit dem Gehäusebecher, insbesondere der Innenseite des Gehäusebechers. Beispielsweise kann die Innenseite des Mantels des Gehäusebechers mit einer dünnen Schicht aus Lithium ausgekleidet sein.

In weiteren bevorzugten Ausführungsformen zeichnet sich das Energiespeicherelement durch mindestens eines der unmittelbar folgenden Merkmale a. bis f. aus:
a. Das Energiespeicherelement weist im Deckel-Verschlussabschnitt eine Sicherung gegen internen Überdrück auf.
b. Das den Deckel des Gehäuses bildende zweite Metallteil weist eine Öffnung sowie einen die Öffnung umgebenden Aussparungsbereich auf, in welchem die Dicke im Vergleich zum übrigen zweiten Metallteil reduziert ist.
c. Die Öffnung des zweiten Metallteils ist kreisförmig ausgebildet.
d. Die Öffnung des zweiten Metallteils ist durch eine Membran verschlossen, die dazu ausgelegt ist, bei einem im Inneren des Gehäuses herrschenden festgelegten Überdruck zu bersten.
e. Die Membran ist in dem Aussparungsbereich des zweiten Metallteils eingelassen.
f. Eine vom Elektroden-Separator-Verbund weg weisende Oberfläche der Membran verläuft in einer gemeinsamen Ebene mit einer vom Elektroden-Separator-Verbund weg weisenden Oberfläche des zweiten Metallteils.

Es ist bevorzugt, dass die unmittelbar vorstehenden Merkmale a. bis f. in Kombination realisiert sind.

### Bevorzugte materielle Beschaffenheit von Stromkollektoren, Gehäusebecher und Metallteilen

Die Stromkollektoren des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt stehen die Stromkollektoren aus einem Metall oder sind zumindest oberflächlich metallisiert.

Die materielle Beschaffenheit der Stromkollektoren hängt u.a. ab von den elektrochemischen Gegebenheiten, insbesondere der Elektrodenchemie.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt bei oberhalb von 99,5%.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Der Gehäusebecher besteht bevorzugt aus Aluminium, einer Aluminiumlegierung oder einem Stahlblech, beispielsweise einem vernickelten Stahlblech. Geeignete Aluminiumlegierungen für den Gehäusebecher sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5%.

Die Beschaffenheit des an der ersten Stirnseite anliegenden Metallteils und eines möglicherweise vorhandenen zweiten Metallteils hängt davon ab, ob es sich bei dem aus der ersten endständigen Stirnseite austretenden freien Randstreifen um den freien Randstreifen des Kathodenstromkollektors oder um den freien Randstreifen des Anodenstromkollektors handelt.

Wenn es sich bei dem aus der ersten endständigen Stirnseite austretenden freien Randstreifen um den freien Randstreifen des Kathodenstromkollektors handelt, ist es bevorzugt, dass das an der ersten Stirnseite anliegende Metallteil aus einem gleichen oder chemisch ähnlichen Material wie der Kathodenstromkollektor, also insbesondere aus Aluminium oder einer Aluminiumlegierung, gefertigt sind.

Wenn es sich bei dem aus der ersten endständigen Stirnseite austretenden freien Randstreifen um den freien Randstreifen des Anodenstromkollektors handelt, ist es bevorzugt, dass das an der ersten Stirnseite anliegende Metallteil einem gleichen oder chemisch ähnlichen Material wie der Anodenstromkollektor, also insbesondere aus Kupfer oder Nickel, nickelplattiertem Kupfer, einer Kupfer- oder Nickellegierung oder Edelstahl gefertigt sind.

Die Dichtung besteht in einigen bevorzugten Ausführungsformen aus einem elektrisch isolierenden Kunststoffmaterial, das einen Schmelzpunkt von >200 °C, bevorzugt >300 °C, aufweist. Bei dem Kunststoffmaterial handelt es sich um ein Polyetheretherketon (PEEK), ein Polyimid (Pl), ein Polyphenylsulfid (PPS) oder ein Polytetrafluorethylen (PTFE).

### Elektroden und Elektrodenmaterialien

In einer besonders bevorzugten Ausführungsform ist das erfindungsgemäße Energiespeicherelement eine Lithium-Ionen-Zelle.

Für die Elektroden des Energiespeicherelements können im Grunde sämtliche für sekundäre Lithium-Ionen-Zellen bekannte Elektrodenmaterialien verwendet werden.

In den Anoden können als Aktivmaterialien Partikel auf Kohlenstoffbasis wie graphitischer Kohlenstoff oder zur Interkalation mit Lithium befähigte, nicht graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der Anode enthalten sein, bevorzugt ebenfalls in Partikelform. Weiterhin kann die Anode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere LiOₓ mit 0 < x < 2), enthalten, gegebenenfalls in Kombination mit Aktivmaterialien auf Kohlenstoffbasis. Zinn, Aluminium, Antimon und Silizium sind dazu in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischen Lithium.

Für die Kathoden kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiuminickelmangancobaltoxid (NMC) mit der Summenformel LiNiₓMn_{y}Co_{z}O₂ (wobei x+ y + z typischerweise 1 ist), Lithiummanganspinell (LMO) mit der Summenformel LiMn₂O₄, oder Lithiumcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O-Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbaren Kontakt stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Graphite, Kohlenstofffasern, Carbon-Nanotubes und Metallpulver.

### Ausführungsform auf Natrium-Ionen-Basis

In weiteren Ausführungsformen kann es sich bei dem erfindungsgemäßen Energiespeicherelement auch um eine Natrium-Ionen-Zelle, eine Kalium-Ionen-Zelle, eine Calzium-Ionen-Zelle, eine Magnesium-Ionen-Zelle oder eine Aluminium-Ionen-Zelle handeln. Unter diesen Varianten sind Energiespeicherelemente mit Natrium-Ionen-Zellchemie erfindungsgemäß besonders bevorzugt.

Bevorzugt umfasst das erfindungsgemäße Energiespeicherelement auf Basis von Natrium-Ionen einen Elektrolyten, der mindestens eines der folgenden Lösungsmittel und mindestens eines der folgenden Leitsalze umfasst:
Als Lösungsmittel kommen insbesondere organische Carbonate, Ether, Nitrile und Mischungen daraus in Frage. Bevorzugte Beispiele sind:
- Carbonate: Propylencarbonat (PC), Ethylencarbonat-Propylencarbonat (EC-PC), Propylencarbonat-Dimethylcarbonat-Ethylmethylcarbonat (PC-DMC-EMC), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC), Ethylencarbonat-Dimethylcarbonat-Diethylcarbonat (EC-DMC-DEC)
- Ether: Tetrahydrofuran (THE), 2-Methyltetrahydrofuran, Dimethylether (OME), 1,4-dioxane (DX), 1,3-dioxolane (DOL), Diethylenglykoldimethylether (DEGDME), Tetraethylenglykoldimethylether (TEGDME)
- Nitrile: Acetonitril (ACN), Adiponitril (AON), y-Butyrolactone (GBL)

Weiterhin kommen auch Trimethylphosphat (TMP) und Tris(2,2,2-trifluoroethyl)phosphat (TFP) in Frage.

Bevorzugte Leitsalze sind:
NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaCIO₄, NaB(C₂O₄)₂, NaP(C₆H₄O₂)₃; NaCF₃SO₃, Natriumtriflat (NaTf) und Et₄NBF₄.

Dem Elektrolyten können in bevorzugten Ausführungsformen Additive zugesetzt sein. Beispiele bevorzugter Additive, insbesondere zur Stabilisierung, sind die folgenden:
Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl₃), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

Bei dem negativen Elektrodenmaterial eines erfindungsgemäßen Energiespeicherelements auf Basis von Natrium-Ionen handelt es sich bevorzugt um mindestens eines der folgenden Materialien:
- Kohlenstoff, besonders präferiert Hardcarbon (rein oder mit Stickstoff- und/oder Phosphor-Dotierung) oder Softcarbon oder Graphene-basierte Materialien (mit N-dotierung); Kohlenstoffnanotubes, Graphit
- Phosphor oder Schwefel (Konversionsanode)
- Polyanionen: Na₂Ti₃O₇, Na₃Ti₂(PO₄)₃, TiP₂O₇, TiNb₂O₇, Na-Ti-(PO₄)₃, Na-V-(PO₄)₃
- Preussisch Blau: Na-arme Variante (für Systeme mit wässrigem Elektrolyt)
- Übergangsmetalloxide: V₂O₅, MnO₂, TiO₂, Nb₂O₅, Fe₂O₃, Na₂Ti₃O₇, NaCrTiO₄, Na₄Ti₅O₁₂
- MXene mit M= Ti, V, Cr, Mo oder Nb und A = Al, Si, und Ga sowie X= C und/oder N, z.B. Ti₃C₂
- Organisch: z.B. Na-Terephthalate (Na₂C₈H₂O₄)

Alternativ kann anodenseitig grundsätzlich auch eine Na-Metallanode zum Einsatz kommen.

Bei dem positiven Elektrodenmaterial eines erfindungsgemäßen Energiespeicherelements auf Basis von Natrium-Ionen handelt es sich beispielsweise um mindestens eines der folgenden Materialien:
- Polyanionen: NaFePO₄ (Triphylit-Typ), Na₂Fe-(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O7, NaCoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(NiFeCo)₃O₂, Na(NiFeMn)O₂, and Na(NiFeCoMn)O₂, Na(NiMnCo)O₂

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei die Aktivmaterialien bevorzugt partikulär eingesetzt werden und benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Na-)Polyacrylat, Styrol-Butadien-Kautschuk, (Na-)Alginat oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Besonders bevorzugt bestehen bei einem erfindungsgemäßen Energiespeicherelement sowohl der Anoden- als auch der Kathodenstromkollektor aus Aluminium oder einer Alumniumlegierung. Auch das Gehäuse und die Kontaktplatten sowie ggf. vorhandene weitere Stromleiter innerhalb des Gehäuses können aus Aluminium oder aus der Aluminiumlegierung bestehen.

### Bevorzugte materielle Ausführungsformen von Elektrolyt und Separator

Das erfindungsgemäße Energiespeicherelement umfasst bevorzugt einen flüssigen Elektrolyten, im Falle einer Lithium-Ionen-Zelle insbesondere einen Elektrolyten auf Basis mindestens eines Lithiumsalzes wie beispielsweise Lithiumhexafluorophosphat (LiPF₆), das in einem organischen Lösungsmittel gelöst vorliegt (z.B. in einer Mischung organsicher Carbonate oder einem cyclischen Ether wie THF oder einem Nitril). Andere einsetzbare Lithiumsalze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Der Separator eines Elektroden-Separator-Verbunds des erfindungsgemäßen Energiespeicherelements ist wie die Elektroden bevorzugt bandförmig ausgebildet. Gegebenenfalls umfasst der Elektroden-Separator-Verbund des erfindungsgemäßen Energiespeicherelements mehr als einen bandförmigen Separator. So kann es beispielsweise bevorzugt sein, dass die bandförmige Anode oder die bandförmige Kathode zwischen zwei bandförmigen Separatoren angeordnet ist.

Der Separator wird bevorzugt aus einer elektrisch isolierenden Kunststofffolie gebildet. Er weist bevorzugt Poren auf, so dass er von dem flüssigen Elektrolyten durchdrungen werden kann. Die Kunststofffolie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 bis 50 µm aufweisen.

Es ist allerdings grundsätzlich auch möglich, dass es sich bei dem bandförmigen Separator um einen Separator aus einem Festkörperelektrolyten, der eine intrinsische lonenleitfähgikeit aufweist und nicht mit einem flüssigen Elektrolyten getränkt werden muss, handelt. Bei dem Festkörperelektrolyt kann es sich beispielsweise um einen Polymerfestkörperelektrolyten basierend auf einem Polymer-Leitsalzkomplex, der einphasig ohne jegliche Flüssigkomponente vorliegt, handeln. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluormethan)sulfonylimid (LiTFSI), Lithiumhexafluorophosphat (LIPF₆) und Lithiumtetrafluoroborat (LIBF₄) vorliegen.

### Bevorzugte Formen und Dimensionen von Elektroden und Separator

Der Anodenstromkollektor, der Kathodenstromkollektor und der Separator oder die Separatoren des erfindungsgemäßen Energiespeicherelements weisen bevorzugt jeweils die folgenden Dimensionen auf:
- Eine Länge im Bereich von 0,5 m bis 25m,
- Eine Breite im Bereich 40 mm bis 145 mm.

### Bevorzugte Ausführungsformen des Elektroden-Separator-Verbunds

Es ist bevorzugt, dass die Längsränder des oder der Separatoren die Stirnseiten des als Wickel ausgebildeten Elektroden-Separator-Verbunds bilden.

Um einen direkten Kontakt entgegengesetzt gepolter Elektroden an den axialen Enden des Elektroden-Separator-Verbunds in Form des zylindrischen Wickels zu verhindern, verwendet man bevorzugt Separatoren, die etwas breiter sind als die zu separierenden Elektroden. Der Elektroden-Separator-Verbund schließt somit an seinen axialen Enden in bevorzugten Ausführungsformen jeweils mit einem Separatorüberstand ab, der entsprechend die Stirnseiten bildet, aus der die freien Randstreifen der Stromkollektoren austreten.

Es ist bevorzugt, dass die aus den endständigen Stirnseiten des Wickels austretenden freien Randstreifen der Stromkollektoren nicht mehr als 5500 µm, bevorzugt nicht mehr als 4000 µm, aus den Stirnseiten herausragen.

Besonders bevorzugt ragt der freie Randstreifen des Anodenstromkollektors aus der Stirnseite des Wickels nicht mehr als 3000 µm, besonders bevorzugt nicht mehr als 2000 µm, heraus. Besonders bevorzugt ragt der freie Randstreifen des Kathodenstromkollektors aus der Stirnseite des Wickels nicht mehr als 4000 µm, besonders bevorzugt nicht mehr als 3000 µm, heraus.

In dem als Wickel ausgebildeten Elektroden-Separator-Verbund liegen die bandförmige Anode, die bandförmige Kathode und der oder die bandförmigen Separatoren spiralförmig aufgewickelt vor. Zur Herstellung des Verbundkörpers werden vorzugsweise die bandförmigen Elektroden gemeinsam mit dem oder den bandförmigen Separatoren einer Wickelvorrichtung zugeführt und bevorzugt in dieser um eine Wickelachse herum spiralförmig aufgewickelt. In einigen Ausführungsformen werden die Elektroden und der oder die Separatoren hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

In besonders bevorzugten Ausführungsformen werden die Stirnseiten des als Wickel ausgebildeten Elektroden-Separator-Verbunds vor oder während seiner Montage wärmebehandelt, insbesondere derart, dass der Separatorüberstand zumindest teilweise schmilzt oder aber sich unter der Einwirkung der Wärme deformiert. Durch entsprechende Vorbehandlung ist es auch möglich, den Separatorüberstand einer gerichteten Deformation zu unterziehen. Beispielsweise können die die Stirnseiten bildenden Separatorränder nur auf einer Seite mit einer keramischen Beschichtung versehen sein. Wird ein solcher Separatorrand bei geeigneten Temperaturen wärmebehandelt, rollt er sich ein und kann die Stirnseite auf diese Weise verschließen.

Bevorzugt sind die bandförmige Anode und die bandförmige Kathode innerhalb des Elektroden-Separator-Verbunds versetzt zueinander angeordnet, um zu gewährleisten, dass der freie Randstreifen des Anodestromkollektors aus einer der endständigen Stirnseiten und der freie Randstreifen des Kathodenstromkollektors aus der anderen der endständigen Stirnseiten austritt.

### Bevorzugte Nennkapazität des Energiespeicherelements

Die Nennkapazität eines als zylindrische Rundzelle ausgebildeten erfindungsgemäßen Energiespeicherelements auf Lithium-Ionen-Basis beträgt bevorzugt bis zu 15000 mAh. Mit dem Formfaktor von 21 × 70 hat das Energiespeicherelement in einer Ausführungsform als Lithium-Ionen-Zelle bevorzugt eine Nennkapazität im Bereich von 1500 mAh bis 7000 mAh, besonders bevorzugt im Bereich von 3000 mAh bis 5500 mAh. Mit dem Formfaktor 18 x 65 hat das Energiespeicherelement in einer Ausführungsform als Lithium-Ionen-Zelle bevorzugt eine Nennkapazität im Bereich von 1000 mAh bis 5000 mAh, besonders bevorzugt im Bereich von 2000 mAh bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Depot an mobilen Ionen

Die Funktion einer Lithium- oder Natriumzelle basiert darauf, dass ausreichend mobile Ionen (im Falle einer Natrium-Ionen-Zelle mobile Natrium-Ionen, Falle einer Lithium-Ionen-Zelle mobile Lithium-Ionen) zur Verfügung stehen, um durch Wanderung zwischen der Anode und der Kathode bzw. der negativen Elektrode und der positiven Elektrode den abgegriffenen elektrischen Strom auszugleichen. Unter mobilen Ionen im Rahmen dieser Anmeldung ist zu verstehen, dass die Ionen für Ein- und Auslagerungsvorgänge in den Elektroden im Rahmen der Entlade- und Ladevorgänge des erfindungsgemäßen Energiespeicherelements zur Verfügung steht oder hierfür aktiviert werden können. Im Zuge der ablaufenden Entlade- und Ladeprozesse z.B. einer Lithium-Ionen-Zelle kommt es im Laufe der Zeit zu Verlusten an mobilem Lithium. Diese Verluste treten in Folge von verschiedenen, in der Regel nicht vermeidbaren Nebenreaktionen auf. Bereits im Rahmen des ersten Lade- und Entladezyklus kommt es zu Verlusten an mobilen Ionen. Bei diesem ersten Lade- und Entladezyklus bildet sich in der Regel eine Deckschicht auf der Oberfläche der elektrochemisch aktiven Komponenten an der negativen Elektrode. Diese Deckschicht wird als Solid Electrolyte Interphase (SEI) bezeichnet und besteht in der Regel vor allem aus Elektrolytzersetzungsprodukten sowie im Fall von Lithium-Ionen-Zellen einer gewissen Menge an Lithium, das in dieser Schicht fest gebunden ist.

Um diese Verluste auszugleichen, umfassen erfindungsgemäße Energiespeicherelemente auf Natrium-Ionen-Basis in bevorzugten Ausführungsformen ein nicht von der positiven und/oder der negativen Elektrode umfasstes Depot an Natrium oder einem natriumhaltigen Material, mit dem Verluste an mobilem Natrium während ihres Betriebs ausgeglichen werden können.

Besonders geeignet als natriumhaltiges Material sind beispielsweise Na₃P und Na₃N. Diese Materialien können beispielsweise dem Elektrodenaktivmaterial zugesetzt werden.

Erfindungsgemäße Energiespeicherelemente auf Lithium-Ionen-Basis umfassen in bevorzugten Ausführungsformen ein nicht von der positiven und/oder der negativen Elektrode umfasstes Depot an Lithium oder einem öithiumhaltigen Material, mit dem Verluste an mobilem Lithium während ihres Betriebs ausgeglichen werden können.

Geeignet ist beispielsweise metallisches Lithium.

In besonders bevorzugten Ausführungsformen kann das metallische Lithium der oben beschriebenen Referenzelektrode als Lithium-Depot dienen. Durch Anlegen einer entsprechenden Spannung an die Referenzelektrode kann die Konzentration an Lithium-Ionen im Elektrolyten mit besonderem Vorteil aktiv gesteuert werden.

Analoges wäre auch mit metallischem Natrium im Gehäuse denkbar.

Es ist auch denkbar, dass die Elektroden durch Vorladung mit einem Überschuss an Lithium- oder Natriumionen beladen werden.

### Herstellungsverfahren

Das erfindungsgemäße Herstellungsverfahren dient der Herstellung des oben beschriebenen Energiespeicherelements und zeichnet sich durch die unmittelbar folgenden Merkmale a. bis e. aus:
a. Es werden ein Gehäusebecher mit einer endständigen Öffnung sowie einer Durchbrechung im Boden und ein Elektroden-Separator-Verbund mit einer ersten und einer zweiten Stirnseite, jeweils wie bereits oben zum Energiespeicherelement definiert, bereitgestellt.
b. Es wird ein Metallteil, das einen Vorsprung umfasst, bereitgestellt.
c. Das Metallteil wird auf der ersten Stirnseite angeordnet und durch Verschweißung mit dem aus der ersten Stirnseite austretenden freien Randstreifen verbunden.
d. Der Elektroden-Separator-Verbund wird, mitsamt dem Metallteil und mit der ersten Stirnseite voran, durch die endständige Öffnung des Gehäusebechers so weit in den Gehäusebecher eingeschoben, dass der Vorsprung in die Durchbrechung eingeschoben ist oder durch die Durchbrechung hindurchragt,
e. ein Hohlraum zwischen dem Metallteil und dem Boden wird mit einer Vergussmasse befüllt, die in ausgehärtetem Zustand elektrisch isolierende Eigenschaften hat.

Wenn die Vergussmasse ausgehärtet ist, bildet diese die oben zum Energiespeicherelement beschriebene Dichtung in dem Ringspalt aus.

Bevorzugt zeichnet sich das Verfahren zur Herstellung des Energiespeicherelements durch mindestens eines der unmittelbar folgenden Merkmale a. und b. aus:
a. Vor Schritt c. des oben beschriebenen Verfahrens wird auf dem Boden des Gehäusebechers oder auf dem Metallteil mindestens ein Abstandhalter aus einem elektrisch isolierenden Material angeordnet, um die Dimensionen des Hohlraums zwischen dem Metallteil und dem Boden festzulegen.
b. Der Abstandhalter ist scheiben- oder ringförmig ausgebildet.

Bevorzugt sind die unmittelbar vorstehenden Merkmale a. und b. in Kombination realisiert.

Bevorzugt zeichnet sich das Verfahren zur Herstellung des Energiespeicherelements zusätzlich oder alternativ durch mindestens eines der unmittelbar folgenden Merkmale a. bis d. aus:
a. Es wird ein Elektroden-Separator-Verbund in den Gehäusebecher eingeschoben, bei dem die bandförmigen Elektroden derart ausgebildet und/oder angeordnet sind, dass der freie Randstreifen des Anodenstromkollektors oder des Kathodenstromkollektors aus der ersten endständigen Stirnseite und der andere der freien Randstreifen aus der zweiten endständigen Stirnseite des Elektroden-Separator-Verbunds austritt.
b. Das Energiespeicherelement umfasst das die erste endständige Stirnseite abdeckende Metallteil als erstes Metallteil.
c. Vor oder nach dem Einschieben des Elektroden-Separator-Verbunds in den Gehäusebecher wird ein zweites Metallteil auf der zweiten endständigen Stirnseite angeordnet und dort durch Verschweißung mit dem aus der zweiten endständigen Stirnseite austretenden freien Randstreifen verbunden.
d. Der Rand des zweiten Metallteils wird rundum mit dem Gehäusebecher verschweißt.

Es ist bevorzugt, dass die unmittelbar vorstehenden Merkmale a. bis c. oder a. bis d. in Kombination realisiert sind.

Bevorzugt zeichnet sich das Verfahren zur Herstellung des Energiespeicherelements zusätzlich oder alternativ durch mindestens eines der unmittelbar folgenden Merkmale a. bis c. aus:
a. Es wird durch eine Öffnung im ersten oder im zweiten Metallteil ein Elektrolyt in den Innenraum des Gehäusebechers gefüllt.
b. Die Öffnung in dem Metallteil wird verschlossen, insbesondere mittels einer Membran, die dazu ausgelegt ist, bei einem im Inneren des Gehäuses herrschenden festgelegten Überdruck zu bersten.
c. Die Öffnung ist kreisförmig ausgebildet.

Es ist bevorzugt, dass die unmittelbar vorstehenden Merkmale a. und b., a. und c. oder a. bis c. in Kombination realisiert sind.

Weitere Kombinationen von Merkmalen betreffend das Energiespeicherelement oder das Verfahren zur Herstellung des Energiespeicherelements sind, auch wenn sie oben nicht explizit aufgeführt sind, für den Fachmann selbstverständlich ebenfalls denkbar, sofern mit diesen Kombinationen eine im Lichte der Erfindung stehende synergistische technische Wirkung verbunden ist.

### Kurzbeschreibung der Zeichnungen

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch:
- Figur 1: eine erste Ausführungsform eines erfindungsgemäßen Energiespeicherelements in einer längsgeschnittenen Ansicht;
- Figur 2: eine zweite Ausführungsform des erfindungsgemäßen Energiespeicherelements in einer längsgeschnittenen Ansicht;
- Figur 3: eine dritte Ausführungsform des erfindungsgemäßen Energiespeicherelements in einer längsgeschnittenen Ansicht;
- Figur 4: eine längsgeschnittene Ansicht eines Elektroden-Separator-Verbunds, mit dem ein erstes Metallteil und ein zweites Metallteil durch Verschweißung verbunden sind;
- Figur 5: den Elektroden-Separator-Verbund, der Bestandteil des erfindungsgemäßen Energiespeicherelements ist, sowie dessen Komponenten;
- Figur 6: eine Abfolge von Verfahrensschritten eines Verfahrens zur Herstellung des erfindungsgemäßen Energiespeicherelements;
- Figur 7: eine vierte Ausführungsform des erfindungsgemäßen Energiespeicherelements in einer längsgeschnittenen Ansicht.

### Beschreibung der Ausführungsbeispiele

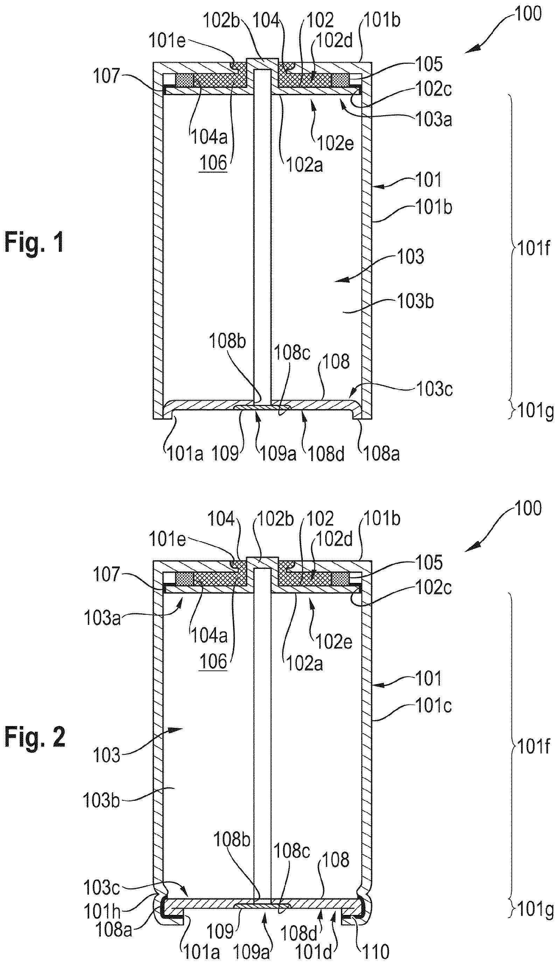

**Fig. 1** und **Fig. 2** zeigen eine erste und eine zweite Ausführungsform eines erfindungsgemäßen Energiespeicherelements 100, die jeweils ein luft- und flüssigkeitsdicht verschlossenes Gehäuse haben, das einen metallischen Gehäusebecher 101 mit einer endständigen kreisförmigen Öffnung 101a, einem Boden 101b, einer umlaufenden Seitenwand 101c sowie einem Deckel 101d umfasst. Der Boden 101b des Gehäusebechers 101 weist eine Durchbrechung 101e auf, die beispielsweise mittels eines Stanzvorgangs durch den Boden 101b des Gehäusebechers 101 hergestellt ist.

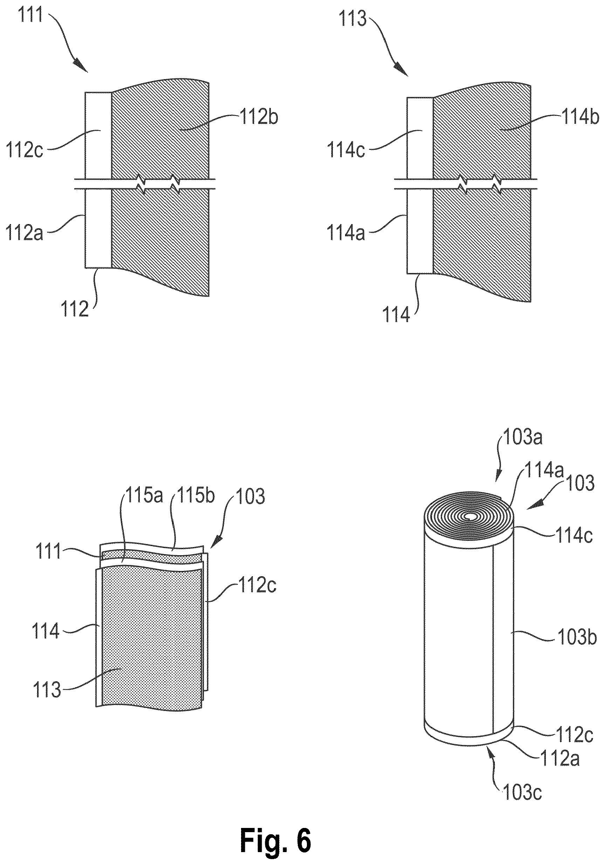

Das Energiespeicherelement 100 umfasst ein Metallteil 102, das eine erste endständige Stirnseite 103a eines Elektroden-Separator-Verbunds 103 (der Elektroden-Separator-Verbund wird in Bezug auf **Fig. 6** beschrieben werden) abdeckt und vorliegend als erstes Metallteil 102 ausgebildet ist. Das erste Metallteil 102 umfasst einen flachen Bereich 102a, an den ein aus der ersten endständigen Stirnseite 103a austretender freier Randstreifen des Elektroden-Separator-Verbunds 103 geschweißt ist, und einen von der ersten endständigen Stirnseite 103a weg weisenden napfförmigen Vorsprung 102b. Das Metallteil 102 ist samt dem napfförmigen Vorsprung 102b einstückig ausgebildet und durch einen umformenden, beispielsweise Tiefziehen, oder spanenden Fertigungsschritt, beispielsweise Fräsen, oder alternativ durch 3D-Druck hergestellt.

Der napfförmige Vorsprung 102b ragt durch die Durchbrechung 101e des Gehäusebecherbodens 101b hindurch, so dass der napfförmige Vorsprung 102b von außerhalb des Gehäuses mechanisch von einem nicht dargestellten externen Energieverbraucher kontaktierbar ist - mittelbar über einen nicht dargestellten Leiter oder unmittelbar mechanisch. Das erste Metallteil 102 ist scheibenförmig ausgebildet, weist einen kreisförmigen Rand 102c, eine zum Boden 101b des Gehäusebechers 101 gerichtete erste Seite 102d und eine zum Elektroden-Separator-Verbund 103 gerichtete zweite Seite 102e auf. Der napfförmige Vorsprung 102b ist zylindrisch ausgebildet und tritt auf der zweiten Seite 102e des Metallteils 102 als zylindrische Vertiefung und auf der ersten Seite 102d des Metallteils 102 als zylindrische Erhöhung zu Tage.

Der Boden 101b und das erste Metallteil 102 sind durch eine elektrisch isolierende Dichtung 104 voneinander isoliert, die vorliegend als erste Dichtung 104 ausgebildet und durch eine ausgehärtete Vergussmasse realisiert ist, wobei die Dichtung 104 zumindest bereichsweise scheibenförmig ausgebildet ist und einen kreisförmigen Rand 104a aufweist.

Darüber hinaus ist zwischen dem Boden 101b des Gehäusebechers 101 und dem ersten Metallteil 102 ein ringförmiger Abstandhalter 105 aus einem elektrisch isolierenden Material angeordnet, der gemeinsam mit der ersten Seite 102d des ersten Metallteils 102 und dem Boden 101b des Gehäusebechers 101 einen Ringspalt 106 ausbildet. Der Ringspalt 106 ist durch die Dichtung 104 aus der ausgehärteten Vergussmasse gefüllt.

Das Energiespeicherelement 100 umfasst darüber hinaus ein Isoliermittel 107 aus einem elektrisch isolierenden Material, das zwischen dem kreisförmigen Rand 102c des ersten Metallteils 102 und dem Gehäusebecher 101 angeordnet ist und den kreisförmigen Rand 102c des ersten Metallteils 102 elektrisch von dem Potential des Gehäusebechers 101 isoliert. Beim vorliegenden Ausführungsbeispiel umfasst das Isoliermittel 107 zumindest als Teilkomponente ein Polyimid. Konkret liegt das Isoliermittel in Form von Kapton ^{®} -Klebeband der Firma DuPont vor.

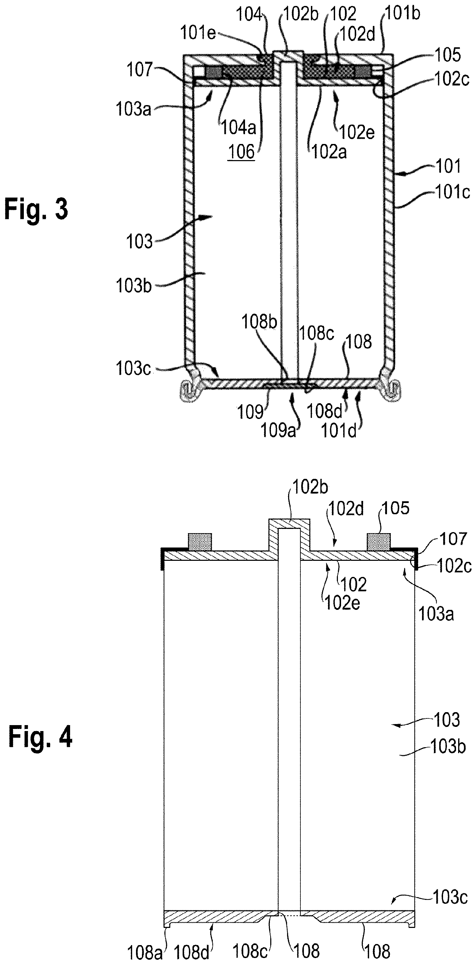

In besonders bevorzugten Ausführungsformen kann an Stelle eines getrennt von dem Abstandhalter 105 vorliegenden Isoliermittels 107 auch ein ringförmiges Kunststoffbauteil auf den Rand des Metallteils 102 (vgl. Fig. 4) aufgesetzt sein, das sowohl die Funktion des Abstandhalters 105 als auch die des Isoliermittels 107 erfüllt, also gleichzeitig zur Ausbildung des erwähnten Ringspalts dient und den kreisförmigen Rand 102c des ersten Metallteils 102 elektrisch von dem Potential des Gehäusebechers 101 isoliert. Das reduziert die Komplexität und vereinfacht die Herstellung.

Der Gehäusebecher 101 umfasst in axialer Abfolge den Boden 101b, einen zylindrisch ausgebildeten Zentralabschnitt 101f und einen Deckel-Verschlussabschnitt 101g. In dem Zentralabschnitt 101f berührt ein Wickelmantel 103b des als Wickel ausgebildeten Elektroden-Separator-Verbunds 103 eine Innenseite des Gehäusebechers 101.

Bandförmige Elektroden, wie sie in **Fig. 6** dargestellt sind, sind innerhalb des als Wickel ausgebildeten Elektroden-Separator-Verbunds 103 derart ausgebildet und angeordnet, dass ein Randstreifen eines Stromkollektors aus der ersten endständigen Stirnseite 103a und ein Randstreifen eines anderen Stromkollektors aus der zweiten endständigen Stirnseite 103c des Elektroden-Separator-Verbunds 103 austritt. Vorliegend tritt ein erster freier Randstreifen des Kathodenstromkollektors aus der ersten endständigen Stirnseite 103a des Elektroden-Separator-Verbunds und ein freier Randstreifen des Anodenstromkollektors aus der zweiten endständigen Stirnseite 103c des Elektroden-Separator-Verbunds 103 aus.

Der aus der ersten endständigen Stirnseite 103a austretende freie Randstreifen des Kathodenstromkollektors erstreckt sich entlang eines erst in Bezug auf die **Fig. 6** mit einem Bezugszeichen versehenen ersten Längsrands und bildet eine Fläche, auf der das erste Metallteil 102 vorliegend aufliegt. Das erste Metallteil 102 ist mit der durch den freien Randstreifen des Kathodenstromkollektors gebildeten Fläche verschweißt und deckt im Wesentlichen die gesamte erste endständige Stirnseite 103a ab (vgl. **Fig. 4**).

Das Energiespeicherelement 100 umfasst zusätzlich zum ersten Metallteil 102 ein zweites Metallteil 108, das die zweite endständige Stirnseite 103c des Elektroden-Separator-Verbunds abdeckt und unmittelbar mit dem aus der zweiten endständigen Stirnseite 103c austretenden freien Randstreifen des Elektroden-Separator-Verbunds 103 verschweißt ist (vgl. **Fig. 4**). Bei den Ausführungsformen der **Fig. 1** und **Fig. 2** bildet das zweite Metallteil 108 den Deckel 101d des Gehäuses und verschließt die endständige kreisförmige Öffnung 101a des Gehäusebechers 101. Wie auch das erste Metallteil 102 ist das zweite Metallteil 108 derart dimensioniert, dass es im Wesentlichen die gesamte zweite endständige Stirnseite 103c des Elektroden-Separator-Verbunds 103 abdeckt. Auch das zweite Metallteil 108 ist scheibenförmig ausgebildet und weist einen kreisförmigen Rand 108a auf.

Weiterhin weist das zweite Metallteil 108 eine kreisförmige Öffnung 108b sowie einen die kreisförmige Öffnung 108b umgebenden Aussparungsbereich 108c auf, in welchem die Dicke im Vergleich zum übrigen zweiten Metallteil 108 reduziert ist. Die kreisförmige Öffnung 108b des zweiten Metallteils 108 wird durch eine Membran 109 verschlossen, die dazu ausgelegt ist, bei einem im Inneren des Gehäuses herrschenden festgelegten Überdruck zu bersten. Die Membran 109 fungiert daher als Sicherung gegen internen Überdruck im Deckel-Verschlussabschnitt 101f des Gehäusebechers 101. Die Membran 109 ist in dem Aussparungsbereich 108c des zweiten Metallteils 108 eingelassen und ist derart ausgestaltet, dass eine vom Elektroden-Separator-Verbund 103 weg weisende Oberfläche 109a der Membran 109 in einer gemeinsamen Ebene mit einer vom Elektroden-Separator-Verbund 103 weg weisenden Oberfläche 108d des zweiten Metallteils 108 liegt.

Das erste Metallteil 102 und das zweite Metallteil 108 weisen eine im Wesentlichen gleichmäßige Dicke im Bereich von 150 µm bis 350 µm auf.

Bei der ersten Ausführungsform des Energiespeicherelements 100 nach **Fig. 1** ist der kreisförmige Rand 108a des zweiten Metallteils 108 um 90° umgebogen und rundum mit dem Gehäusebecher 101 verschweißt.

Bei der zweiten Ausführungsform des Energiespeicherelements 100 nach **Fig. 2** werden der Zentralabschnitt 101f und der Deckel-Verschlussabschnitt 101g des Gehäusebechers 101 hingegen durch eine radiale Sicke 101h, die die Außenseite des Gehäusebechers 101 ringförmig umläuft, voneinander getrennt. Eine zweite Dichtung 110, die in dem Deckel-Verschlussabschnitt 101g angeordnet ist, steht in einem Presskontakt mit dem zweiten Metallteil 108 und der Innenseite des Gehäusebechers 101 und isoliert die beiden Teile elektrisch voneinander. Die zweite Dichtung 110 weist bevorzugt einen kreisförmigen Rand 110a auf.

Die in **Fig. 3** dargestellte dritte Ausführungsform des Energiespeicherelements 100 unterscheidet sich von der ersten und zweiten Ausführungsform nur darin, dass das zweite Metallteil 108 durch einen Falzverschluss mit dem Gehäusebecher 101 verbunden ist. Bei dieser Ausführung ist das Gehäuse natürlich nicht potentialfrei, es wird je nach Auslegung Anoden- oder Kathodenpotential haben.

Ein bevorzugter Aufbau des Elektroden-Separator-Verbunds geht aus **Fig. 6** hervor. Der Elektroden-Separator-Verbund 103 umfasst eine bandförmige Anode 111 mit einem bandförmigen Anodenstromkollektor 112 und eine bandförmige Kathode 113 mit einem bandförmigen Kathodenstromkollektor 114. Bei dem Anodenstromkollektor 112 handelt es sich bevorzugt um eine Folie aus Kupfer oder Nickel. Bei dem Kathodenstromkollektor 114 handelt es sich bevorzugt um eine Aluminiumfolie. Sowohl der Anodenstromkollektor 112 als auch der Kathodenstromkollektor 114 weisen einen ersten Längsrand 112a, 114a und einen zweiten Längsrand, einen Hauptbereich 112b, 114b sowie einen freien Randstreifen 112c, 114c auf. Die Hauptbereiche 112b, 114b sind mit einer Schicht aus Elektrodenmaterial beladen, im Fall der Anode 111 mit negativem Elektrodenmaterial, im Fall der Kathode 113 mit positivem Elektrodenmaterial. Die freien Randstreifen 112c, 114c erstrecken sich entlang des jeweils ersten Längsrands 112a, 114a und sind nicht mit Elektrodenmaterial beladen. Beide Elektroden sind einzeln in ungewickeltem Zustand dargestellt. Innerhalb des gewickelten Elektroden-Separator-Verbunds 103 sind die Anode 111 und die Kathode 113 versetzt zueinander angeordnet, derart, dass der erste Längsrand 114a des Kathodenstromkollektors 114 aus der ersten endständigen Stirnseite 103a des Elektroden-Separator-Verbunds 103 austritt. Der erste Längsrand 112a des Anodenstromkollektors 112 tritt aus der zweiten endständigen Stirnseite 103c des Elektroden-Separator-Verbunds aus. Dies ist in der Darstellung rechts unten gut zu erkennen. Die versetzte Anordnung geht aus der Darstellung links unten hervor. Dort sind auch zwei bandförmige Separatoren 115a und 115b dargestellt, die im Wickel die Elektroden 111, 113 voneinander trennen. Der Wickelmantel 103b des Elektroden-Separator-Verbunds 103 wird meist durch eine Kunststofffolie gebildet.

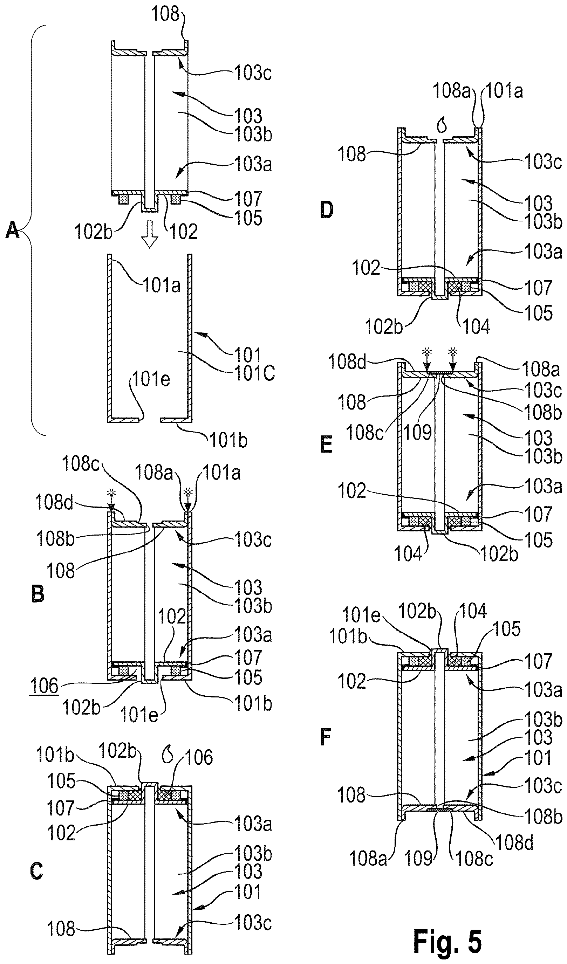

Anhand der **Fig. 5** wird nachfolgend nun das Verfahren zur Herstellung eines wie oben beschriebenen Energiespeicherelements 100 erläutert werden.

In einem ersten unter **A** dargestellten Schritt werden der Gehäusebecher 101 mit der endständigen kreisförmigen Öffnung 101a sowie einer Durchbrechung 101e im Boden 101b und ein Elektroden-Separator-Verbund 103 mit einer ersten endständigen Stirnseite 103a und einer zweiten endständigen Stirnseite 103c, wie oben beschrieben, bereitgestellt. Daneben wird das erste Metallteil 102 mit dem napfförmigen Vorsprung 102a bereitgestellt. Noch in Schritt A wird das erste Metallteil 102 auf der ersten Stirnseite 103a angeordnet und durch Verschweißung mit dem aus der ersten Stirnseite 103a austretenden freien Randstreifen 112c oder 114c verbunden. Darüber hinaus wird bei der vorliegenden Ausführungsform des Verfahrens das zweite Metallteil 108 bereitgestellt und durch Verschweißung mit dem aus der zweiten Stirnseite 103c austretenden anderen der freien Randstreifen 112c oder 114c verbunden.

In einem zweiten unter **B** dargestellten Schritt wird der Elektroden-Separator-Verbund 103 mitsamt dem ersten Metallteil 102 und bevorzugt mit dem zweiten Metallteil 108 und mit der ersten Stirnseite 103a voran durch die endständige kreisförmige Öffnung 101a des Gehäusebechers 101 so weit in den Gehäusebecher 101 eingeschoben, dass der napfförmige Vorsprung 102a durch die Durchbrechung 101e des Gehäusebecherbodens 101b hindurchragt. Es wird auf dem Gehäusebecherboden 101b oder auf dem Metallteil 102 der ringförmige Abstandhalter 105 aus dem elektrisch isolierenden Material angeordnet, um die Dimensionen eines Hohlraums, vorliegend des oben beschriebenen Ringspalts 106, zwischen dem Metallteil 102 und dem Boden 101b festzulegen. Wenn ein Energiespeicherelement 100 gemäß der Ausführungsform nach Fig. 1 hergestellt wird, wird der kreisförmige Rand 108a des zweiten Metallteils bevorzugt rundum mit dem Gehäusebecher 101 mittels eines Lasers oder dergleichen verschweißt.

In einem zweiten unter **C** und **D** dargestellten Schritt wird der Ringspalt 106, zwischen dem ersten Metallteil 102 und dem Boden 101b mit einer Vergussmasse befüllt, die in ausgehärtetem Zustand elektrisch isolierende Eigenschaften hat und die erste Dichtung 104 ausbildet. Die Vergussmasse wird sodann ausgehärtet, beispielsweise an Luft und bei Raumtemperatur, jedoch bevorzugt bei 100 °C unter Vakuum.

In einem dritten unter **E** dargestellten Schritt wird durch die kreisförmige Öffnung 108b im zweiten Metallteil 108 ein Elektrolyt in den Innenraum des Gehäusebechers 101 gefüllt. Bevorzugt befindet sich das Energiespeicherelement 100 zu diesem Zeitpunkt noch unter Vakuum. Somit kann ein unerwünschtes Eindringen von Schwebstoffen in das Innere des Gehäuses vermieden werden.

In einem letzten unter **F** dargestellten Schritt wird die kreisförmige Öffnung 108b in dem zweiten Metallteil 108 verschlossen, mittels der Membran 109, die dazu ausgelegt ist, bei einem im Inneren des Gehäuses herrschenden festgelegten Überdruck zu bersten. Die Membran 109 wird hierfür im Aussparungsbereich 108c des zweiten Metallteils 108 mit dem zweiten Metallteil 108 mittels eines Lasers oder dergleichen verschweißt.

Es versteht sich, dass die obigen Ausführungen zu den konkreten in den **Fig. 1** bis **Fig. 5** dargestellten Ausführungsformen lediglich bevorzugte Ausgestaltungsvarianten der Erfindung sind und den Schutzbereich des unabhängigen Anspruchs 1 nicht beschränken. Der Fachmann entnimmt alternative Ausgestaltungsvarianten der vorliegenden Erfindung dem allgemeinen Teil.

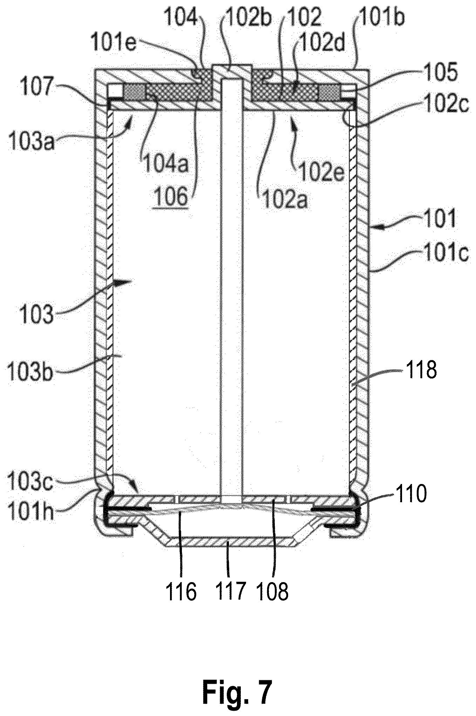

Die in **Fig. 7** dargestellte vierte Ausführungsform des Energiespeicherelements 100 unterscheidet sich von der ersten und zweiten Ausführungsform dadurch, dass das zweite Metallteil 108 Bestandteil einer mehrteiligen Deckelbaugruppe ist, die neben dem Metallteil 108 eine metallische Membran 116 und eine Polkappe 117 und eine elektrisch isolierende Dichtung 110 umfasst. Die Dichtung 110 isoliert die Membran 116 in Randbereichen gegen das Metallteil 108. Hingegen ist das Zentrum der Membran bevorzugt durch Verschweißung mit dem Metallteil 108 verbunden. Im Falle eines irregulären Überdrucks in der Zelle kann sich die Membran 116 nach außen wölben, so dass die Verbindung zu dem Metallteil 108 abreißt.

Weiterhin weist das Energiespeicherelement 100 eine dünne Lithiumschicht 118 auf der Innenseite des Gehäusemantels auf. Diese Schicht dient als Lithium-Depot und vermag Verluste an Lithium-Ionen während des Betriebs zu kompensieren. Weiterhin kann die Schicht auch als Referenzelektrode dienen, da die Schicht ja in unmittelbarem und damit in elektrischem Kontakt mit dem Gehäuse steht. So kann beispielsweise ein Spannungsgefälle zwischen der Referenzelektrode und der positiven oder der negativen Elektrode bestimmt werden. Durch Anlegen einer entsprechenden Spannung kann auch gezielt die Konzentration an Lithium-Ionen im Elektrolyten des Energiespeicherelements beeinflusst werden.

## Patentansprüche

1. Energiespeicherelement (100) mit den folgenden Merkmalen:
a. Das Energiespeicherelement (100) umfasst einen Elektroden-Separator-Verbund (103) mit der Sequenz Anode (111) / Separator (115a, 115b) / Kathode (113), wobei
• die Anode (111) des Elektroden-Separator-Verbunds (103) bandförmig ausgebildet ist und einen bandförmigen Anodenstromkollektor (112) umfasst, der einen ersten Längsrand (112a) und einen dazu parallelen zweiten Längsrand aufweist,
• der bandförmige Anodenstromkollektor (112) einen Hauptbereich (112b) umfasst, der mit einer Schicht aus einem negativen Elektrodenmaterial beladen ist, sowie einen freien Randstreifen (112c), der sich entlang seines ersten Längsrands (112a) erstreckt und der nicht mit dem negativen Elektrodenmaterial beladen ist,
• die Kathode (113) des Elektroden-Separator-Verbunds (103) bandförmig ausgebildet ist und einen bandförmigen Kathodenstromkollektor (114) umfasst, der einen ersten Längsrand (114a) und einen dazu parallelen zweiten Längsrand aufweist,
• der bandförmige Kathodenstromkollektor (114) einen Hauptbereich (114b) umfasst, der mit einer Schicht aus einem positiven Elektrodenmaterial beladen ist, sowie einen freien Randstreifen (114c), der sich entlang seines ersten Längsrands (114a) erstreckt und der nicht mit dem positiven Elektrodenmaterial beladen ist,
• der Elektroden-Separator-Verbund (103) in Form eines zylindrischen Wickels mit einer ersten endständigen Stirnseite (103a) und einer zweiten endständigen Stirnseite (103c) und einem dazwischen liegenden Wickelmantel (103b) vorliegt und die Anode (111) und die Kathode (113) in spiralförmig aufgewickelter Form umfasst,
• die Anode (111) und die Kathode (113) innerhalb des als Wickel ausgebildeten Elektroden-Separator-Verbunds (103) derart ausgebildet und/oder angeordnet sind, dass der freie Randstreifen (114c) des Kathodenstromkollektors (114) oder der freie Randstreifen (112c) des Anodenstromkollektors (112) aus der ersten endständigen Stirnseite (103a) austritt,
b. das Energiespeicherelement (100) umfasst ein luft- und flüssigkeitsdicht verschlossenes Gehäuse, das einen metallischen Gehäusebecher (101) mit einem Boden (101b) und einer umlaufenden Seitenwand (101c) sowie einer endständigen Öffnung (101a) und einen Deckel (101d) aufweist,
c. das Energiespeicherelement (100) umfasst ein Metallteil (102), das die erste endständige Stirnseite (103a) abdeckt,
d. das Metallteil (102) umfasst einen flachen Bereich (102a), an den der aus der ersten endständigen Stirnseite (103a) austretende freie Randstreifen (112c; 114c) geschweißt ist, und einen von der ersten endständigen Stirnseite (103a) weg weisenden Vorsprung (102b),
e. der Boden (101b) des Gehäusebechers (101) weist eine Durchbrechung (101e) auf, in welche der Vorsprung (102b) eingeschoben ist oder durch welche der Vorsprung (102b) hindurchragt, so dass der Vorsprung (102b) von außerhalb des Gehäuses mechanisch kontaktierbar ist und
f. der Boden (101b) und das Metallteil (102) sind durch eine elektrisch isolierende Dichtung (104) voneinander isoliert.

2. Energiespeicherelement (100) nach Anspruch 1 mit mindestens einem der folgenden zusätzlichen Merkmale:
a. Der von der ersten endständigen Stirnseite (103a) weg weisende Vorsprung (102b) des Metallteils (102) ist napfförmig ausgebildet.
b. Das Metallteil (102) einschließlich des Vorsprungs (102b) ist einstückig ausgebildet.

3. Energiespeicherelement (100) nach Anspruch 1 oder 2 mit mindestens einem der folgenden zusätzlichen Merkmale:
a. Die bandförmigen Elektroden (111, 113) sind innerhalb des als Wickel ausgebildeten Elektroden-Separator-Verbunds (103) derart ausgebildet und/oder angeordnet, dass einer der freien Randstreifen (112c; 114c) des Anodenstromkollektors (112) oder des Kathodenstromkollektors (114) aus der ersten endständigen Stirnseite (103a) und der andere der freien Randstreifen (112c; 114c) aus der zweiten endständigen Stirnseite (103c) des Elektroden-Separator-Verbunds (103) austritt.
b. Das Energiespeicherelement (100) umfasst das die erste endständige Stirnseite (103a) abdeckende Metallteil (102) als erstes Metallteil (102).
c. Ein zweites Metallteil (108) deckt die zweite endständige Stirnseite (103c) ab und ist unmittelbar mit dem aus der zweiten endständigen Stirnseite (103c) austretenden freien Randstreifen (112c, 114c) verschweißt.
d. Das zweite Metallteil (108) bildet den Deckel (101d) des Gehäuses.
e. Das zweite Metallteil (108) verschließt die endständige Öffnung (101a) des Gehäusebechers (101).

4. Energiespeicherelement (100) nach einem der vorhergehenden Ansprüche mit mindestens einem der folgenden zusätzlichen Merkmale:
a. Die endständige Öffnung (101a) des Gehäusebechers (100) ist kreisförmig ausgebildet.
b. Das erste und/oder das zweite Metallteil (102; 108) ist scheibenförmig ausgebildet und weist einen kreisförmigen Rand (102c; 108a) auf.
c. Der kreisförmige Rand (108a) des zweiten Metallteils ist um 90° umgebogen.
d. Die Dichtung (104) ist zumindest bereichsweise scheiben- oder ringförmig ausgebildet und weist einen kreisförmigen Rand (104a) auf.
e. Das Energiespeicherelement (100) umfasst ein Isoliermittel (107) aus einem elektrisch isolierenden Material, das zwischen dem Rand (102c) des die erste Stirnseite (103a) abdeckenden Metallteils (102) und dem Gehäusebecher (101) angeordnet ist und den Rand (102c) des ersten Metallteils (102) elektrisch von dem Potential des Gehäusebechers (101) isoliert.

5. Energiespeicherelement (100) nach einem der vorhergehenden Ansprüche mit mindestens einem der folgenden zusätzlichen Merkmale:
a. Das Gehäuse umfasst in axialer Abfolge den Boden (101b), einen Zentralabschnitt (101f) und einen Deckel-Verschlussabschnitt (101g).
b. In dem Zentralabschnitt (101f) berührt der Wickelmantel (103b) des als Wickel ausgebildeten Elektroden-Separator-Verbunds (103) die Innenseite des Gehäusebechers (101).
c. Der Zentralabschnitt (101f) ist zylindrisch ausgebildet.

6. Energiespeicherelement (100) nach einem der vorhergehenden Ansprüche mit mindestens einem der folgenden zusätzlichen Merkmale:
a. Das die erste Stirnseite (103a) abdeckende Metallteil (102) weist eine zum Boden des Gehäusebechers (101) hin gerichtete erste Seite (102d) und eine zum Elektroden-Separator-Verbund hin gerichtete zweite Seite (102e) auf.
b. Zwischen dem Boden (101b) des Gehäusebechers (101) und dem die erste Stirnseite (103a) abdeckenden Metallteil (102) ist ein ringförmiger Abstandhalter (105) aus einem elektrisch isolierenden Material angeordnet.
c. Der Abstandhalter (105), die erste Seite (102d) des die erste Stirnseite (103a) abdeckenden Metallteils (102) und der Boden (101b) des Gehäusebechers (101) bilden einen Ringspalt (106) aus, der von der Dichtung (104) gefüllt ist.

7. Energiespeicherelement (100) nach einem der vorhergehenden Ansprüche mit mindestens einem der folgenden zusätzlichen Merkmale:
a. Der erste Längsrand (112a; 114a), entlang dem sich der aus der ersten endständigen Stirnseite (103a) des Elektroden-Separator-Verbunds (103) austretende freie Randstreifen (112c; 114c) erstreckt, bildet eine Fläche, auf der das die erste Stirnseite (103a) abdeckende Metallteil (102) zumindest bereichsweise flach aufliegt oder in die das Metallteil (102) zumindest bereichsweise eingepresst ist.
b. Das die erste Stirnseite (103a) abdeckende Metallteil (102) ist derart dimensioniert, dass es mindestens 40 %, bevorzugt mindestens 60 %, besonders bevorzugt mindestens 80 %, der ersten endständigen Stirnseite (103a) abdeckt.
c. Das die erste Stirnseite (103a) abdeckende Metallteil (103) weist eine bevorzugt gleichmäßige Dicke im Bereich von 50 µm bis 600 µm, bevorzugt im Bereich von 150 µm bis 350 µm, auf.
d. Der Vorsprung (102b) des die erste Stirnseite (103a) abdeckenden Metallteils (102) ist zylindrisch ausgebildet und tritt auf der zweiten Seite (102e) des Metallteils (102) als zylindrische Vertiefung und auf der ersten Seite (102d) des Metallteils (102) als zylindrische Erhöhung zu Tage.

8. Energiespeicherelement (100) nach einem der Ansprüche 3 bis 7 mit mindestens einem der folgenden zusätzlichen Merkmale:
a. Der erste Längsrand (112; 114a), entlang dem sich der aus der zweiten endständigen Stirnseite (103c) des Elektroden-Separator-Verbunds (103) austretende freie Randstreifen (112c; 114c) erstreckt, bildet eine Fläche, an der das zweite Metallteil (108) zumindest bereichsweise flach anliegt oder in die das zweite Metallteil (108) zumindest bereichsweise eingepresst ist.
b. Das zweite Metallteil (108) ist derart dimensioniert, dass es mindestens 40%, bevorzugt mindestens 60%, besonders bevorzugt mindestens 80% der zweiten endständigen Stirnseite (103c) abdeckt.
c. Das zweite Metallteil (108) weist eine bevorzugt gleichmäßige Dicke im Bereich von 50 µm bis 600 µm, bevorzugt im Bereich von 150 µm bis 350 µm auf.

9. Energiespeicherelement (100) nach Anspruch 5 mit mindestens einem der folgenden zusätzlichen Merkmale:
a. Der Zentralabschnitt (101f) und der Deckel-Verschlussabschnitt (101g) werden durch eine radiale Sicke (101h), die die Außenseite des Gehäusebechers (101) ringförmig umläuft, voneinander getrennt.
b. Das Energiespeicherelement (101) umfasst die den Boden des Gehäusebechers und das erste Metallteil elektrisch voneinander isolierende Dichtung (104) als erste Dichtung (104).
c. In dem Deckel-Verschlussabschnitt (101g) ist eine zweite Dichtung (110) angeordnet, die in einem Presskontakt mit dem zweiten Metallteil (108) und der Innenseite des Gehäusebechers (101) steht.
d. Die zweite Dichtung (110) ist ringförmig ausgebildet und weist einen kreisförmigen Rand (110a) auf.

10. Energiespeicherelement (100) nach einem der vorhergehenden Ansprüche mit mindestens einem der folgenden zusätzlichen Merkmale:
a. Das Energiespeicherelement (100) weist im Deckel-Verschlussabschnitt (101g) eine Sicherung gegen internen Überdrück auf.
b. Das zweite Metallteil (108) weist eine Öffnung (108b) sowie einen die Öffnung (108b) umgebenden Aussparungsbereich (108c) auf, in welchem die Dicke im Vergleich zum übrigen zweiten Metallteil (108) reduziert ist.
c. Die Öffnung (108b) des zweiten Metallteils (108) ist kreisförmig ausgebildet.
d. Die Öffnung (108b) des zweiten Metallteils (108) wird durch eine Membran (109) verschlossen, die dazu ausgelegt ist, bei einem im Inneren des Gehäuses herrschenden festgelegten Überdruck zu bersten.
e. Die Membran (109) ist in dem Aussparungsbereich (108c) des zweiten Metallteils (108) eingelassen.
f. Eine vom Elektroden-Separator-Verbund (103) weg weisende Oberfläche (109a) der Membran (109) verläuft in einer gemeinsamen Ebene mit einer vom Elektroden-Separator-Verbund weg weisenden Oberfläche (108d) des zweiten Metallteils (108).

11. Verfahren zur Herstellung eines Energiespeicherelements (100) mit den Merkmalen eines oder mehrerer der Ansprüche 1 bis 10 mit den Schritten:
a. Es werden ein Gehäusebecher (101) mit einer endständigen Öffnung (101a) sowie einer Durchbrechung (101e) im Boden (101b) und ein Elektroden-Separator-Verbund (103) mit einer ersten und einer zweiten Stirnseite (103a, 103c), jeweils wie in Anspruch 1 definiert, bereitgestellt.
b. Es wird ein Metallteil (102), das einen Vorsprung (102b) umfasst, bereitgestellt.
c. Das Metallteil (102) wird auf der ersten Stirnseite (103a) angeordnet und durch Verschweißung mit dem aus der ersten Stirnseite (103a) austretenden freien Randstreifen (112c; 114c) verbunden.
d. Der Elektroden-Separator-Verbund (103) wird, mitsamt dem Metallteil (102) und mit der ersten Stirnseite (103a) voran, durch die endständige Öffnung (101a) des Gehäusebechers (101) so weit in den Gehäusebecher (101) eingeschoben, dass der Vorsprung (102b) in die Durchbrechung (101e) eingeschoben ist oder durch die Durchbrechung (101e) hindurchragt,
e. ein Hohlraum zwischen dem Metallteil (102) und dem Boden (101b) wird mit einer Vergussmasse befüllt, die in ausgehärtetem Zustand elektrisch isolierende Eigenschaften hat.

12. Verfahren nach Anspruch 11, mit mindestens einem der folgenden zusätzlichen Merkmale:
a. Vor Schritt c. des Anspruchs 11 wird auf dem Boden (101b) des Gehäusebechers (101) oder auf dem Metallteil (102) mindestens ein Abstandhalter (105) aus einem elektrisch isolierenden Material angeordnet, um die Dimensionen des Hohlraums zwischen dem Metallteil (102) und dem Boden (101b) festzulegen.
b. Der Abstandhalter (105) ist scheiben- oder ringförmig ausgebildet.

13. Verfahren nach Anspruch 11 oder nach Anspruch 12, mit mindestens einem der folgenden zusätzlichen Merkmale:
a. Es wird ein Elektroden-Separator-Verbund (103) in den Gehäusebecher (101) eingeschoben, bei dem die bandförmigen Elektroden (111; 113) derart ausgebildet und/oder angeordnet sind, dass der freie Randstreifen (112c; 114c) des Anodenstromkollektors (112) oder des Kathodenstromkollektors (114) aus der ersten endständigen Stirnseite (103a) und der andere der freien Randstreifen (112c; 114c) aus der zweiten endständigen Stirnseite (103c) des Elektroden-Separator-Verbunds (103) austritt.
b. Das Energiespeicherelement (100) umfasst das die erste endständige Stirnseite (103a) abdeckende Metallteil (102) als erstes Metallteil (102).
c. Vor oder nach dem Einschieben des Elektroden-Separator-Verbunds (103) in den Gehäusebecher (101) wird ein zweites Metallteil (108) auf der zweiten endständigen Stirnseite (103c) angeordnet und dort durch Verschweißung mit dem aus der zweiten endständigen Stirnseite (103c) austretenden freien Randstreifen verbunden (112c; 114c).
d. Der Rand (108a) des zweiten Metallteils (108) wird rundum mit dem Gehäusebecher (101) verschweißt.

14. Verfahren nach einem der Ansprüche 11 bis 13, mit mindestens einem der folgenden zusätzlichen Merkmale:
a. Es wird durch eine Öffnung (108b) im zweiten Metallteil (108) ein Elektrolyt in den Innenraum des Gehäusebechers (101) gefüllt.
b. Die Öffnung (108b) in dem zweiten Metallteil (108) wird verschlossen, insbesondere mittels einer Membran (109), die dazu ausgelegt ist, bei einem im Inneren des Gehäuses herrschenden festgelegten Überdruck zu bersten.
c. Die Öffnung (108b) ist kreisförmig ausgebildet.
